# EUROPEAN PATENT SPECIFICATION

(11) **EP 2 848 011 B1**
(45) Date of publication and mention of the grant of the patent: **13.01.2021**
(21) Application number: 12723604.0
(22) Date of filing: 07.05.2012
(51) Int. Cl.: H04W 4/021, H04W 4/70, H04W 8/00, H04W 48/14, H04W 48/12

(54) **METHOD FOR DETERMINING THE NUMBER AND/OR CAPABILITIES OF USER EQUIPMENTS IN A GEOGRAPHIC AREA OF AN ACCESS NETWORK, USER EQUIPMENT FOR USE IN A GEOGRAPHIC AREA OF AN ACCESS NETWORK, BASE TRANSCEIVER STATION FOR DETERMINING THE NUMBER OF USER EQUIPMENTS IN A GEOGRAPHIC AREA OF AN ACCESS NETWORK, PROGRAM AND COMPUTER PROGRAM PRODUCT**
VERFAHREN ZUR BESTIMMUNG DER ANZAHL UND/ODER KAPAZITÄTEN VON BENUTZERENDGERÄTEN IN EINEM GEOGRAFISCHEN BEREICH EINES ZUGANGSNETZWERKS, BENUTZERENDGERÄT ZUR VERWENDUNG IN EINEM GEOGRAFISCHEN BEREICH EINES ZUGANGSNETZWERKS, SENDER-EMPFÄNGER-BASISSTATION ZUR BESTIMMUNG DER ANZAHL VON BENUTZERENDGERÄTEN IN EINEM GEOGRAFISCHEN BEREICH EINES ZUGANGSNETZWERKS, PROGRAMM UND COMPUTERPROGRAMMPRODUKT
PROCÉDÉ POUR DÉTERMINER LE NOMBRE ET/OU LES CAPACITÉS D'ÉQUIPEMENTS UTILISATEURS DANS UNE ZONE GÉOGRAPHIQUE D'UN RÉSEAU D'ACCÈS, ÉQUIPEMENT UTILISATEUR DESTINÉ À ÊTRE UTILISÉ DANS UNE ZONE GÉOGRAPHIQUE D'UN RÉSEAU D'ACCÈS, STATION D'ÉMISSION-RÉCEPTION DE BASE POUR DÉTERMINER LE NOMBRE D'ÉQUIPEMENTS UTILISATEURS DANS UNE ZONE GÉOGRAPHIQUE D'UN RÉSEAU D'ACCÈS, PROGRAMME ET PROGRAMME INFORMATIQUE

(43) Date of publication of application: 18.03.2015
(73) Proprietor: Deutsche Telekom AG, 53113 Bonn (DE)
(72) Inventor: LEHSER, Frank, 53175 Bonn (DE); NEUBACHER, Andreas, A-2100 Korneuburg (AT); KLATT, Axel, 50999 Köln (DE)
(74) Representative: Schwöbel, Thilo K.
(86) International application number: PCT/EP2012/001954
(87) International publication number: WO 2013/167146

(56) References cited:
- EP-A1- 2 362 697
- EP-A1- 2 369 883
- WO-A2-2011/042417
- US-A1- 2012 040 700
- US-A1- 2012 076 085
- NOKIA SIEMENS NETWORKS: "Key Issue for Infrequent Transmission", 3GPP DRAFT; S2-110778_SIMTC_INFREQUENT_TRANSMISSION_KE Y_ISSUE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523943, [retrieved on 2011-02-15]

## Description

### BACKGROUND

The present invention relates a method for determining the number and/or capabilities of user equipment in a geographic area of an access network of a public land mobile network.

The present invention further relates to a user equipment for use in a geographic area of an access network of a public land mobile network, and to a base transceiver station for determining the number and capabilities of user equipments in a geographic area of an access network of a public land mobile network.

The procedure to track the dedicated cell of a user or of a user equipment in a public land mobile network and to notify user equipments about incoming connection requests is important for the functionality of mobile networks. The possibility to get knowledge of the dedicated cell a user or a user equipment is camping on is important, e.g., for a voice call and more generally in any case that data of other network entities, like gateways etc., are to be sent to a specific user equipment.

Generally, there are two possible schemes to track the dedicated cell of a user equipment:
(1) The user equipment does announce its presence within a certain radio cell at each radio cell change while moving between different radio cells of the public land mobile network. The public land mobile network keeps track about each and every radio cell change.
(2) The user equipment is paged (i.e. the base transceiver station of a radio cell or of a plurality of radio cells transmit a certain identification which is associated with a certain user equipment on the broadcast channel) and it is indicated to the user equipment to contact the base transceiver station (or another node of the public land mobile network), i.e. to make the public land mobile network aware about the current cell of the user equipment.
Both schemes have benefits and drawbacks depending on the mobility pattern of user equipments. While according to the first scheme, rather static (i.e. non moving) user equipments benefit from the necessity of only a rather small number of signalling occasions, i.e. a minimum of signalling requirements, (as the locations of the different user equipments are known to the public land mobile network due to the last radio cell change), this scheme has drawbacks in case that user equipments are frequently changing their locations. This is because any user equipment has to inform the public land mobile network about its current cell at each radio cell change, i.e. the first scheme causes a rather important need for signalling between the user equipments on the one hand and the public land mobile network on the other hand.
On the contrary, the second scheme has benefits in case of rather fast moving (i.e. very mobile) user equipments as only a minimum of signalling occurs in case of such fast moving user equipments since the user equipment does not have to announce its presence at each radio cell change and thus there is rather limited signalling in case the user equipment moves between different locations of the public land mobile network. However, the second scheme leads to a rather high signalling load in many radio cells in case the user equipment needs to be paged since (due to the fact that the public land mobile network is not aware about the precise location of the user equipment) paging messages need to be broadcast in many or all radio cells while the user equipment is only present in one radio cell.
In order to keep the related signalling between different nodes or components of the public land mobile network as well as between the user equipment and the nodes of the public land mobile network comparably low, the two tracking schemes are combined in 2G (second generation) public land mobile networks (such as the GERAN (GSM EDGE Radio Access Network) network), in 3G (third generation) public land mobile networks (such as the UTRAN (UMTS Terrestrial Radio Access Network) network, and in 4G (fourth generation) public land mobile networks (such as the eUTRAN (Evolved UTRAN) network).
In 2G public land mobile networks, a number of radio cells can be combined to a so called location area (LA). Within a location area, which is identified by a specific identifier on the broadcast channel, the user equipment is allowed to freely move within the location area and to camp on each radio cell (i.e. to have a radio connection to the respective base transceiver station of the radio cell) without the need to notify the public land mobile network. Just in case the user equipment changes between radio cells which are members of different location areas, the user equipment has to inform the network that, in case of a paging need, the user equipment has to be paged in the new location area. Such a combined scheme of tracking a user equipment allows - depending on the network planning - to find a trade off between, on the one hand, the signalling needs for the signalling for location update reasons between the user equipment and the public land mobile network and, on the other hand, the signalling needs on broadcast channels within radio cells for paging purposes.
Other tracking schemes to cope with user equipment mobility are implemented in eUTRAN public land mobile networks, allowing to track a user equipment on different location granularity, either on location area level, UTRAN routing area (RA), eUTRAN tracking area (TA) level or even the radio cell level (for a limited number of user equipments).

However, knowledge about whether a user equipment is within a coverage range of a certain radio cell would be beneficial, especially for counting purposes of user equipments within a specific radio cell.

In current public land mobile networks of the second, third and fourth generation (GERAN, UTRAN, eUTRAN) as well as in other radio access technologies, paging requests are
-- originated by hierarchically higher network elements or network entities, like the MSC (Mobile Switching Center), SGSN (Serving GPRS Support Node), MME (Mobility Management Entity), etc., and
-- dedicated to a single user equipment in order to make it aware about incoming calls or messages, connection requests or data to be received by that specific user equipment from the hierarchically higher network element or network entity.
Therefore, an a priori knowledge about the user equipment to be paged is needed in order to contact a specific user equipment Related prior art is disclosed in patent publications US 2012/076085 A1, US 2012/040700 A1, EP 2 369 883 A1 and in 3GPP contribution TD S2-110778.

### SUMMARY

An object of the present invention is to provide a simple solution for determining the number and/or capabilities of user equipment in a geographic area of an access network of a public land mobile network.

The object of the present invention is achieved by a method according to claim 1. The present invention is further defined by the subject matter of the appended set of claims.

It is thereby advantageously possible according to the present invention that a request can be sent from the base transceiver station to all the user equipments of the plurality of user equipments to provide the identity information element. It is especially advantageous that the base transceiver station, when sending the identity request information element, does not need to indicate or specify any user equipment individually (e.g. by means of indicating a user equipment specific identity information such as an IMSI number or the like) but it is possible to broadcast the identity request information element, at least in principle, to all user equipments that camp on the radio cell served by the base transceiver station.

According to the present invention, it is advantageously possible that the identity information element provides an information about the identity of the user equipment such that a first user equipment can be distinguished or discriminated from a second user equipment. A simple method to ensure to not count a user equipment several times is to implement a method that a user equipment has to announce its existence exactly one time in a certain defined time period. So the BTS can assume that after a request for announcement the user equipment does not indicate itself several time in this time period.

However, the identity information element does not necessarily need to comprise the information about the identity of the user equipment such that the identity of the user (of that user equipment) can be derived from such an information about the identity. Thereby, it is advantageously possible according to the present invention that the level of data privacy protection of personal data of users within the public land mobile network can be enhanced - or is not reduced by the implementation of the inventive method - because the base transceiver stations of the public land mobile network are able to distinguish between different user equipments (and preferably and advantageously are also able to obtain (general) information about different user equipments, such as the respective capabilities or type of user equipment) and are therefore enabled to provide an enhanced service level but do not have access to individual and personal data or information regarding the user equipments camping on the base transceiver station. For example, it is possible and preferred according to the present invention that instead of the transmission of, e.g., the IMSI number of a user equipment, a number derived from the IMSI number (e.g. the IMSI number in an encrypted form) according to a predefined algorithm is transmitted to the base transceiver station as part of the identity information element.

A further advantage according to the present invention relates to a reduction of signalling traffic compared to applying a conventional paging procedure to all user equipments within the coverage area of the base transceiver station: As conventional paging requests are originated by hierarchically higher network elements or network entities (like the MSC (Mobile Switching Center), SGSN (Serving GPRS Support Node), MME (Mobility Management Entity)), the conventional paging process involves a signalling traffic not only between the user equipment and the base transceiver station but also between the base transceiver station and these hierarchically higher network elements. This additional signalling traffic can be eliminated or at least greatly reduced according to the present invention as the knowledge about the number of user equipments - especially those user equipments in idle mode - is only needed locally at the base transceiver station.

According to the present invention, it is advantageous that knowledge exists at the base transceiver station about the number of user equipments - especially user equipments in a passive mode or in idle mode - within the coverage area of the base transceiver station.
For energy saving reasons of the base transceiver station, an a priori knowledge about the number of user equipments within the coverage area of the base transceiver station is important to derive an accurate decision, e.g. whether the transceiver of the base transceiver station can be switched off for energy saving reasons. E.g. in case that there are many user equipments in a passive mode (i.e. in idle mode) within the coverage area of the base transceiver station, the base transceiver station may not be switched off since the likelihood that a certain number of user equipments will have the need for connectivity within a certain time can be high.
Furthermore, with an increasing number of machine to machine devices (such as meters, vending machines or the like), there is a high likelihood that a certain number of devices, i.e. user equipments, are rather located at fixed places and - during normal usage - do not move at all. The knowledge about which base transceiver stations within the public land mobile network provide the coverage to such user equipments (as well as a capability reporting of such user equipments such as "fixed machine to machine device") is beneficial and allows to greatly enhance the paging signalling, since such devices (user equipments) do not need to be paged in wider areas (such as the complete respective location area or tracking area) than the respective radio cell of the base transceiver station.
Additionally, for operation and maintenance reasons, especially for an end to end connectivity check, the knowledge about the availability of idle mode user equipments within the coverage area of the base transceiver station is allowing an end to end connectivity check and to identify possible otherwise non-detectable failures on the radio frequency units, especially of the base transceiver station.
Furthermore, applications such as
-- the dynamical allocation of spectrum to different radio access technologies or
-- the adaption of cell reselection parameters (e.g. in case of radio cells of different radio access technologies are colocated) or
-- direct to direct communication applications (e.g. to provide assistance to the user equipment as a direct to direct device regarding switching to a proximity discovery functionality)
also benefit from the knowledge about the number of user equipments -especially the respective number of user equipments capable of certain radio access technologies - within the radio coverage area of a base transceiver station.

According to a preferred embodiment of the present invention, the control signals received by the user equipments from the base transceiver station are sent on a control channel, especially the broadcast control channel (BCCH) of the base transceiver station.

Thereby, it is advantageously possible to easily reach all user equipments served by the base transceiver station, even such user equipments that are in a passive mode, especially in the idle mode. Typically, user equipments are configured to save power consumption as much as possible to enhance standby times. Therefore, public land mobile networks implement the concept of discontinuous reception (DRX). This concept allows battery powered devices like mobile phones as user equipments to optimise the power consumption by implementing a so-called "sleep mode" most of the time while no communication is ongoing. Typically, "wakeup-times" are defined during which the user equipments can be reached by the broadcast control channel of the base transceiver station, i.e. the user equipments listen to the broadcast control channel perhaps not at any occasion of a "wakeup-time" but at least regularly (such as, e.g., every 30 seconds or the like).

Since a high number of user equipments camping on the base transceiver station also means that potentially a high number of identity information elements are sent back to the base transceiver station in case of the base transceiver station sending an identity request information element, the present invention provides possibilities that the user equipments receiving the identity request information element respond in a coordinated manner.

According to a preferred embodiment of the present invention, an access class value is assigned to each user equipment of the plurality of user equipments, wherein an access class indication is sent on the broadcast control channel (or the identity request information element comprises an access class indication), wherein a user equipment of the plurality of user equipments sends the identity information element solely in case that the assigned access class value matches the access class indication.

Thereby, it is advantageously possible to avoid overload situations of the radio communication within the radio cell as well as overload situations of the base transceiver station in case that too many user equipments simultaneously receive the identity request information element and in turn try to provide the identity information element to the base transceiver station. The concept of access class barring is part of a UMTS and GERAN and LTE system to prevent access to the base transceiver station in certain situations (i.e. overload situations). According to this concept, it is possible to bar access to the network by blocking random access channel (RACH) access attempts using access class barring. A bitmap of 16 bit ranging from 0 to 15 is indicated - as the access class indication - on the broadcast control channel of the base transceiver station. In case a specific portion (out of 0 to 9) or defined ACs 10 to 15 should be disallowed for access, the appropriate bit is set to "access barred". Based on an equal distribution of access classes - i.e. the access class value - between 0 and 9, it is possible to randomly block access to the base transceiver station and hence block part of the user equipments to send the identity information element to the base transceiver station. In case of an equal distribution of access classes of the user equipments within the radio cell of the base transceiver station, this can occur in steps of 10% (10% per individual AC between 0 and 9).

The use of access classes to define a plurality of user equipments (out of all the user equipments camping in the radio cell of a specific base transceiver station) that are requested to respond to an identity request information element has the further advantage that there might be situation where the process of determining the number of user equipments in a radio cell does not need to be conducted completely. Such a situation refers, e.g., to the situation where the question arises whether a base transceiver station should be switched off for energy saving reasons due to low traffic. If, in such a situation, already for one access class a sufficient number of idle mode user equipment answer (by means of an identity information element) to the identity request information element sent from the base transceiver station, then it is clear that the base transceiver station cannot be switched off. Regarding this peculiar question or situation, the inventive method does not need to be performed also for the other access classes.

According to a further preferred embodiment of the present invention, the identity request information element comprises a timing indication, wherein the identity information element is sent by different user equipments at different times - and dependent on the timing indication - subsequent to the reception of the identity request information element.

Thereby, it is advantageously possible to avoid overload situations of the radio cell and of the base transceiver station because it is assured that not all user equipments that receive a identity request information element will immediately respond by sending the identity information element to the base transceiver station.

According to the present invention, it is furthermore preferred that the identification information element comprises an indication related to the identity of the user equipment and at least one out of the following pieces of information:
-- an indication related to the current status of the user equipment,
-- an indication related to the capabilities of the user equipment,
-- an indication related to a record of previous usage of the user equipment,
wherein the indication related to the capabilities of the user equipment especially relates to an information regarding to: the possible set of radio access technologies the user equipment is able to be used, and/or the device category of the user equipment, and/or the user category assigned to the user equipment.

Thereby, it is advantageously possible according to the present invention that the base transceiver station not only receives information about the existence of the respective user equipment but also regarding the capabilities of the user equipment and regarding further pieces of information related to the user equipment such as the status and/or the capabilities and/or the record of previous usage of the user equipment. The indication related to the current status of the user equipment refers, e.g., to whether the user equipment is in idle mode. The indication related to the capabilities of the user equipment especially refers, e.g. to:
-- the possible set of radio access technologies the user equipment is able to be used (this is especially helpful in case that a base transceiver station regarding a radio access technology should be switched off (especially for energy saving reasons): It should be assured that all user equipments can nevertheless be served, at least by using another radio access technology); and/or
-- the device category of the user equipment, i.e. e.g. whether the user equipment is a machine to machine device or whether the user equipment is enabled for device to device communication (also called peer to peer communication) or whether the user equipment is used in a fixed location (fixed device); and/or
-- the user category assigned to the user equipment (or assigned to the IMSI number), i.e.
whether a gold customer or a silver customer or the like is present in the radio cell. The indication related to a record of previous usage of the user equipment refers, e.g., to the typical switch off time during a day or the like.

It is furthermore preferred according to the present invention that the transmission of the identity information element in the second step to the base transceiver station occurs at most once during a predetermined counting time interval.

Thereby, it is advantageously possible according to the present invention that the base transceiver station at maximum receives one identity information element per counting time interval. The counting time interval is a predetermined time interval, e.g. 30 seconds. Thereby, it is ensured that the identity information element of a user equipment is counted by base transceiver station only once during the counting time interval; however, a user equipment tries as long as the user equipment is successful, i.e. until a setup is done, (or until a time out is reached) to access the control channel to transfer the identity information element.

Furthermore, the present invention relates to a user equipment for use in a geographic area of an access network of a public land mobile network, wherein the access network comprises at least one base transceiver station, wherein the user equipment receives control signals from the base transceiver station, wherein the user equipment is configured such that an identity information element is sent to the base transceiver station in case that an identity request information element is received from the base transceiver station.

The user equipment receives the identity request information element from the base transceiver station and is able to interpret this information element such as to answer by means of an identity information element to be sent to the base transceiver station. It is advantageous according to the present invention that - by means of the information received from the different user equipments - the base transceiver station is able to provide a better and more focused service to the user equipment.

It is furthermore preferred according to the present invention - also with respect to the user equipment - that an access class value is assigned to the user equipment, wherein an access class indication is sent on the broadcast control channel of the base transceiver station, wherein the user equipment is configured to send the identity information element solely in case that the assigned access class value matches the access class indication.

According to further preferred embodiments of the present invention - also with respect to the user equipment - it is preferred that the identity request information element comprises a timing indication, wherein the user equipment is configured to send the identity information element subsequent to the reception of the identity request information element dependent on the timing indication.

It is furthermore preferred according to the present invention that the user equipment is configured such that the transmission of the identity information element to the base transceiver station occurs at most once during a predetermined counting time interval.

Thereby, it is advantageously possible according to the present invention that the base transceiver station at maximum receives one identity information element per counting time interval. The counting time interval is a predetermined time interval, e.g. 30 seconds. Thereby, it is ensured that the identity information element of a user equipment is counted by base transceiver station only once during the counting time interval; however, a user equipment tries as long as the user equipment is successful, i.e. until a setup is done, (or until a time out is reached) to access the control channel to transfer the identity information element.

Additionally, the present invention relates to a base transceiver station for determining the number of user equipments in a geographic area of an access network of a public land mobile network, wherein the access network comprises the base transceiver station, wherein a plurality of user equipments in the geographic area receive control signals from the base transceiver station, wherein the base transceiver station is configured to send an identity request information element to the plurality of user equipments, wherein the base transceiver station is further configured to receive an identity information element from at least a part of the user equipments of the plurality of user equipments.

The base transceiver station sends the identity request information element on a broadcast channel, preferably the broadcast control channel, and is thereby able to reach a plurality of user equipment within the radio cell. The user equipments answer the identity request information element by means of an identity information element to be sent to the base transceiver station. It is advantageous according to the present invention that - by means of the information received from the different user equipments - the base transceiver station is able to provide a better and more focused service to the user equipment.

It is furthermore preferred according to the present invention - also with respect to the base transceiver station - that an access class value is assigned to each user equipment of the plurality of user equipments, wherein an access class indication is sent on the broadcast control channel of the base transceiver station.

According to further preferred embodiments of the present invention - also with respect to the base transceiver station - it is preferred that the base transceiver station is configured such that the identity request information element comprises a timing indication.

Additionally, the present invention relates to a program comprising a computer readable program code which, when executed on a computer or on a user equipment or on a base transceiver station, causes the computer or the user equipment or the base transceiver station to perform the inventive method.

Still additionally, the present invention relates to computer program product for using a user equipment with a base transceiver station, the computer program product comprising a computer program stored on a storage medium, the computer program comprising program code which, when executed on a computer or on the user equipment or on the base transceiver station, causes the computer or the user equipment or the base transceiver station to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a geographic area of a public land mobile network comprising a core network and an access network as well as a plurality of user equipments.
Figure 2 schematically illustrates a communication diagram between a base transceiver station and a user equipment according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

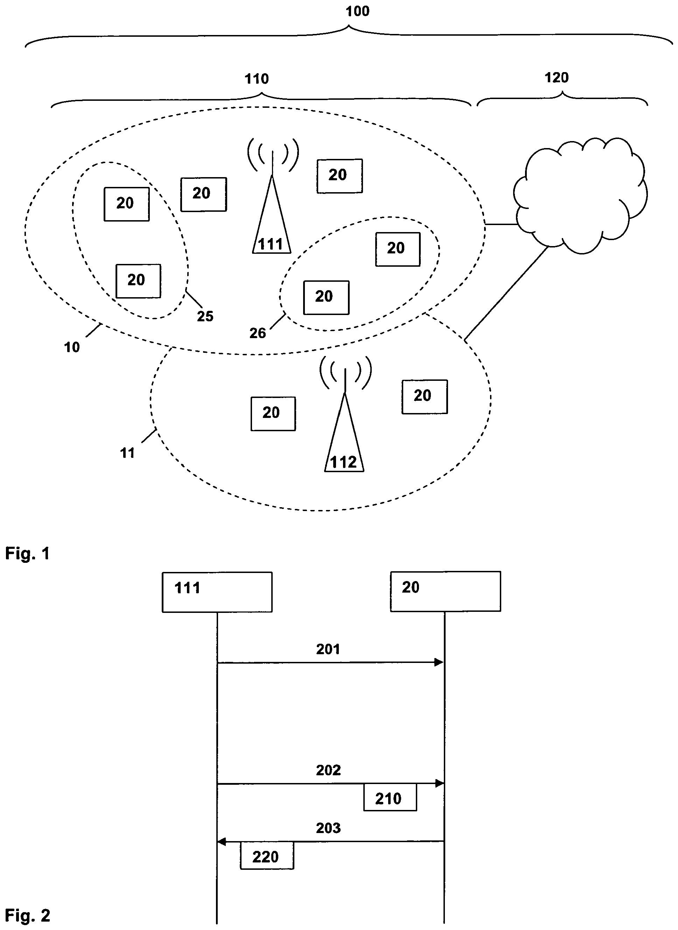

In Figure 1, a geographic area 10 (and a further geographic area 11) of a public land mobile network 100 is schematically shown, the public land mobile network 100 comprising an access network 110 and a core network 120. In the geographic area 10, a plurality of user equipment 20 are located, camping on a radio cell served by a base transceiver station 111 for the geographic area 10. The further geographic area 11 is served by a further base transceiver station 112 and comprises likewise a plurality of user equipments 20.

The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), preferably a plurality of network element thereof. These network element are hierarchically higher network elements than the base transceiver station 111 or the further base transceiver station 112. In case that the geographic area 10 and the further geographic area 11 belong to the same location area or tracking area of the public land mobile network 100, a conventional paging event of a user equipment would be
-- initiated by the hierarchically higher network elements,
-- be paged both in geographic area 10 and in further geographic area 11, i.e. in the whole of the corresponding location area or tracking area, and
-- directed to user equipments 20 that are individually indicated by the paging request message.

According to the present invention, all these requirements of a conventional paging event does not apply in case that the base transceiver station 111 is sending the identity request information element to a plurality of user equipments 20 because
-- the identity request information element is a broadcast message (or is part of a broadcast message or indication) - preferably sent on the broadcast control channel of the base transceiver station 111 - that is solely received within the coverage area of the base transceiver station 111 (i.e. in the geographic area 10) and which is especially not received by the user equipments 20 in the further geographic area 11 (unless the further base transceiver station 112 also sends an identity request information element broadcast message),
-- the trigger for the identity request information element is the base transceiver station 111 and not the hierarchically higher network elements, and
-- there is no need to individually specify the user equipments that are intended to respond to the identity request information element, as the information is especially sent on the broadcast control channel of the base transceiver station.

In order to avoid overload situations when the base transceiver station sends the identity request information element (especially to avoid all the user equipments of a geographic area 10 sending or trying to send the identity information element simultaneously or quasi-simultaneously), it is possible and preferred according to the present invention to implicitly define groups of user equipments 20 - indicated in Figure 1 by means of reference signs 25 and 26 - such that only the user equipments 20 of these groups 25, 26 of user equipments 20 respond simultaneously or quasi-simultaneously to the identity request information element. These groups 25, 26 of user equipments 20 typically also comprise a plurality of user equipments 20, however this plurality of user equipments 20 being a subset of all the user equipments 20 within the geographic area 10. The definition of the groups 25, 26 of user equipments 20 (or the definition of the plurality of user equipment 20 being a subset of all the user equipments 20 within the geographic area 10 served by the base transceiver station 111) is possible according to the present invention by means of access classes and/or by means of timing indications as part of the identity request information element, indicating at which times which groups 25, 26 (or plurality) of user equipments 20 should answer (by means of the respective identity information elements of the concerned user equipments 20). A method to achieve an unambiguous indication of a single user equipment could be that the user terminal 20 is allowed only one time in a defined time period (i.e. in the predefined counting time interval) to give its identity information element based on a request from the base transceiver station 111. In case of non successful setup of control channel towards the base transceiver station, the user equipment 20 tries to setup until the setup is successful (or until a time out is reached) to transmit the identity information element.

In Figure 2, a communication diagram between the base transceiver station 111 and a user equipment 20 according to the present invention is schematically shown.

The premise is that the user equipment 20 is camping on the radio cell served by the base transceiver station 111. This means that control signals 201, 202 are sent from the base transceiver station 111 to the user equipment 20 (or the user equipment 20 is obliged to hear (i.e. tune its antenna(e) and radio frequency circuitry to) the control signals 201, 202. Camping on the radio cell served by the base transceiver station 111 can either be initiated in case that the user equipment 20 has previously been served by another base transceiver station 112, i.e. the user equipment 20 has moved from the further geographic area 11 to the geographic area 10, or the user equipment 20 has been turned on when being present in the geographic area 10. Camping on the radio cell of the base transceiver station 111 means that the broadcast control channel broadcast by the base transceiver station 111 is received by the user equipment 20 which is represented in Figure 2 by means of control signal 201. In a situation that the base transceiver station 111 needs to determine the number of user equipments 20 in the geographic area 10, a modified signal 202 on the broadcast control channel (BCCH) is sent comprising the identity request information element 210. The reception of the identity request information element 210 by the user equipment 20 triggers the emission of answer 203 of the user equipment 20, comprising the identity information element 220. The identity information element 220 preferably comprises not only the information that the user equipment 20 exists but also additional information such as
-- an indication related to the current status of the user equipment 20, and/or
-- an indication related to the capabilities of the user equipment 20, and/or
-- an indication related to a record of previous usage of the user equipment 20.

Thereby, it is possible according to the present invention that the base transceiver station 111 processes the information returned by the identity information elements 220 from the plurality of user equipments 20.

## Claims

1. Method for determining the number and/or capabilities of user equipments (20) in a geographic area (10) of an access network (110) of a public land mobile network (100), wherein the access network (110) comprises at least one base transceiver station (111), wherein a plurality of user equipments (20) in the geographic area (10) receive control signals (201, 202) from the base transceiver station (111), wherein the control signals (201, 202) are sent on a broadcast control channel, BCCH, wherein the method comprises the following steps:
-- in a first step, an identity request information element (210) is sent from the base transceiver station (111) to the plurality of user equipments (20) on the broadcast control channel, BCCH, of the base transceiver station (111),
-- in a second step, an identity information element (220) is sent to the base transceiver station (111) by at least a part of the user equipments (20) of the plurality of user equipments (20),
wherein the plurality of user equipments (20) are in a passive state or in a passive mode of operation,
wherein the identity information element (220) comprises an indication related to the identity of the user equipment (20) and at least one out of the following pieces of information:
-- an indication related to a current status of the user equipment (20), wherein the indication related to the current status of the user equipment (20) refers to whether the user equipment (20) is in idle mode;
-- an indication related to capabilities of the user equipment (20), wherein the indication related to the capabilities of the user equipment (20) relates to an information regarding to a possible set of radio access technologies the user equipment (20) is able to use;
-- an indication related to a record of previous usage of the user equipment (20).

2. Method according to claim 1, wherein an access class value is assigned to each user equipment (20) of the plurality of user equipments (20), wherein an access class indication is sent on the broadcast control channel, BCCH, of the base transceiver station (111), wherein a user equipment (20) of the plurality of user equipments (20) sends the identity information element (220) solely in case that the assigned access class value matches the access class indication.

3. Method according to any the preceding claims, wherein the identity request information element (210) comprises a timing indication, wherein the identity information element (220) is sent by different user equipments (20) at different times - and dependent on the timing indication - subsequent to the reception of the identity request information element (210).

4. Method according to any the preceding claims, wherein the transmission of the identity information element (220) in the second step to the base transceiver station (111) occurs at most once during a predetermined counting time interval.

5. User equipment (20) for use in a geographic area (10) of an access network (110) of a public land mobile network (100), wherein the access network (110) comprises at least one base transceiver station (111), wherein the user equipment (20) receives control signals (201, 202) from the base transceiver station (111) on a broadcast control channel, BCCH, of the base transceiver station (111), wherein the user equipment (20) is configured such that an identity information element (220) is sent to the base transceiver station (111) in case that an identity request information element (210) is received from the base transceiver station (111) on the BCCH of the base transceiver station (111),
wherein the user equipment (20) is in a passive state or in a passive mode of operation,
wherein the identity information element (220) comprises an indication related to the identity of the user equipment (20) and at least one out of the following pieces of information:
-- an indication related to a current status of the user equipment (20), wherein the indication related to the current status of the user equipment (20) refers to whether the user equipment (20) is in idle mode;
-- an indication related to capabilities of the user equipment (20), wherein the indication related to the capabilities of the user equipment (20) relates to an information regarding to a possible set of radio access technologies the user equipment (20) is able to use;
-- an indication related to a record of previous usage of the user equipment (20).

6. User equipment (20) according to claim 5, wherein an access class value is assigned to the user equipment (20), wherein an access class indication is sent on the broadcast control channel, BCCH, of the base transceiver station (111), wherein the user equipment (20) is configured to send the identity information element (220) solely in case that the assigned access class value matches the access class indication.

7. User equipment (20) according to claim 5 or 6, wherein the identity request information element (210) comprises a timing indication, wherein the user equipment (20) is configured to send the identity information element (220) subsequent to the reception of the identity request information element (210) dependent on the timing indication.

8. Base transceiver station (111) for determining the number and/or capabilities of user equipments (20) in a geographic area (10) of an access network (110) of a public land mobile network (100), wherein the access network (110) comprises the base transceiver station (111), wherein a plurality of user equipments (20) in the geographic area (10) receive control signals (201, 202) from the base transceiver station (111), wherein the control signals (201, 202) are sent on a broadcast control channel, BCCH, wherein the base transceiver station (111) is configured to send an identity request information element (210) to the plurality of user equipments (20) on the broadcast control channel, BCCH, of the base transceiver station (111), wherein the base transceiver station (111) is further configured to receive an identity information element (220) from at least a part of the user equipments (20) of the plurality of user equipments (20),
wherein the plurality of user equipments (20) are in a passive state or in a passive mode of operation,
wherein the identity information element (220) comprises an indication related to the identity of the user equipment (20) and at least one out of the following pieces of information:
-- an indication related to a current status of the user equipment (20), wherein the indication related to the current status of the user equipment (20) refers to whether the user equipment (20) is in idle mode;
-- an indication related to capabilities of the user equipment (20), wherein the indication related to the capabilities of the user equipment (20) relates to an information regarding to a possible set of radio access technologies the user equipment (20) is able to use;
-- an indication related to a record of previous usage of the user equipment (20).

9. Base transceiver station (111) according to claim 8, wherein an access class value is assigned to each user equipment (20) of the plurality of user equipments (20), wherein the base transceiver station (111) is configured such that the identity request information element (210) comprises an access class indication.

10. Base transceiver station (111) according to claim 8 or 9, wherein the base transceiver station (111) is configured such that the identity request information element (210) comprises a timing indication.

11. Program comprising a computer readable program code which, when executed on a computer or on a user equipment (20) or on a base transceiver station (111), causes the computer or the user equipment (20) or the base transceiver station (111) to perform a method according one of claims 1 to 4.

12. Computer program product for using a user equipment (20) with a base transceiver station (111), the computer program product comprising a computer program stored on a storage medium, the computer program comprising program code which, when executed on a computer or on the user equipment (20) or on the base transceiver station (111), causes the computer or the user equipment (20) or the base transceiver station (111) to perform a method according one of claims 1 to 4.

## Patentansprüche

1. Verfahren zum Bestimmen der Anzahl und/oder der Fähigkeiten von Benutzerausrüstungen (20) in einem geografischen Gebiet (10) eines Zugangsnetzes (110) eines öffentlichen terrestrischen Mobilfunknetzes (100), wobei das Zugangsnetz (110) mindestens eine Basistransceiverstation (111) umfasst, wobei mehrere Benutzerausrüstungen (20) in dem geografischen Gebiet (10) Steuersignale (201, 202) von der Basistransceiverstation (111) empfangen, wobei die Steuersignale (201, 202) auf einem Broadcast Control Channel (BCCH) gesendet werden, wobei das Verfahren die folgenden Schritte umfasst:
- in einem ersten Schritt wird ein Identitätsanfrage-Informationselement (210) von der Basistransceiverstation (111) an die mehreren Benutzerausrüstungen (20) auf dem Broadcast Control Channel (BCCH) der Basistransceiverstation (111) gesendet,
- in einem zweiten Schritt wird ein Identitätsinformationselement (220) durch mindestens einen Teil der Benutzerausrüstungen (20) der mehreren Benutzerausrüstungen (20) an die Basistransceiverstation (111) gesendet,
wobei sich die mehreren Benutzerausrüstungen (20) in einem passiven Zustand oder in einem passiven Betriebsmodus befinden,
wobei das Identitätsinformationselement (220) einen auf die Identität der Benutzerausrüstung (20) bezogenen Hinweis und mindestens eine der folgenden Informationen umfasst:
- einen Hinweis in Bezug auf den aktuellen Status der Benutzerausrüstung (20), wobei sich der Hinweis in Bezug auf den aktuellen Status der Benutzerausrüstung (20) darauf bezieht, ob sich die Benutzerausrüstung (20) im Leerlaufmodus befindet;
- einen Hinweis in Bezug auf die Fähigkeiten der Benutzerausrüstung (20), wobei sich der Hinweis in Bezug auf die Fähigkeiten der Benutzerausrüstung (20) auf eine Information bezüglich eines möglichen Satzes von Funkzugangstechnologien bezieht, welche die Benutzerausrüstung (20) verwenden kann;
- einen Hinweis in Bezug auf eine Aufzeichnung einer früheren Nutzung der Benutzerausrüstung (20).

2. Verfahren nach Anspruch 1, wobei jeder Benutzerausrüstung (20) der mehreren Benutzerausrüstungen (20) ein Zugriffsklassenwert zugewiesen wird, wobei ein Zugriffsklassenhinweis auf dem Broadcast Control Channel (BCCH) der Basistransceiverstation (111) gesendet wird, wobei eine Benutzerausrüstung (20) der mehreren Benutzerausrüstungen (20) das Identitätsinformationselement (220) nur für den Fall sendet, dass der zugewiesene Zugriffsklassenwert mit dem Zugriffsklassenhinweis übereinstimmt.

3. Verfahren nach einem der vorangehenden Ansprüche, wobei das Identitätsanfrage-Informationselement (210) einen Zeithinweis umfasst, wobei das Identitätsinformationselement (220) durch verschiedene Benutzerausrüstungen (20) zu verschiedenen Zeiten - und in Abhängigkeit von dem Zeithinweis - nach dem Empfang des Identitätsanfrage-Informationselements (210) gesendet wird.

4. Verfahren nach einem der vorangehenden Ansprüche, wobei das Senden des Identitätsinformationselements (220) in dem zweiten Schritt an die Basistransceiverstation (111) höchstens einmal während eines zuvor festgelegten Zählzeitintervalls erfolgt.

5. Benutzerausrüstung (20) zur Verwendung in einem geographischen Gebiet (10) eines Zugangsnetzes (110) eines öffentlichen terrestrischen Mobilfunknetzes (100), wobei das Zugangsnetz (110) mindestens eine Basistransceiverstation (111) umfasst, wobei die Benutzerausrüstung (20) Steuersignale (201, 202) von der Basistransceiverstation (111) auf einem Broadcast Control Channel (BCCH) der Basistransceiverstation (111) empfängt, wobei die Benutzerausrüstung (20) so eingerichtet ist, dass ein Identitätsinformationselement (220) an die Basistransceiverstation (111) für den Fall gesendet wird, dass ein Identitätsanfrage-Informationselement (210) von der Basistransceiverstation (111) auf dem BCCH der Basistransceiverstation (111) empfangen wird,
wobei sich die Benutzerausrüstung (20) in einem passiven Zustand oder in einem passiven Betriebsmodus befindet,
wobei das Identitätsinformationselement (220) einen auf die Identität der Benutzerausrüstung (20) bezogenen Hinweis und mindestens eine der folgenden Informationen umfasst:
- einen Hinweis in Bezug auf den aktuellen Status der Benutzerausrüstung (20), wobei sich der Hinweis in Bezug auf den aktuellen Status der Benutzerausrüstung (20) darauf bezieht, ob sich die Benutzerausrüstung (20) im Leerlaufmodus befindet;
- einen Hinweis in Bezug auf die Fähigkeiten der Benutzerausrüstung (20), wobei sich der Hinweis in Bezug auf die Fähigkeiten der Benutzerausrüstung (20) auf eine Information bezüglich eines möglichen Satzes von Funkzugangstechnologien bezieht, welche die Benutzerausrüstung (20) verwenden kann;
- einen Hinweis in Bezug auf eine Aufzeichnung einer früheren Nutzung der Benutzerausrüstung (20).

6. Benutzerausrüstung (20) nach Anspruch 5, wobei der Benutzerausrüstung (20) ein Zugriffsklassenwert zugewiesen wird, wobei ein Zugriffsklassenhinweis auf dem Broadcast Control Channel (BCCH) der Basistransceiverstation (111) gesendet wird, wobei die Benutzerausrüstung (20) so eingerichtet ist, dass sie das Identitätsinformationselement (220) nur für den Fall sendet, dass der zugewiesene Zugriffsklassenwert mit dem Zugriffsklassenhinweis übereinstimmt.

7. Benutzerausrüstung (20) nach Anspruch 5 oder 6, wobei das Identitätsanfrage-Informationselement (210) einen Zeithinweis umfasst, wobei die Benutzerausrüstung (20) dafür eingerichtet ist, das Identitätsinformationselement (220) nach dem Empfang des Identitätsanfrage-Informationselements (210) in Abhängigkeit von dem Zeithinweis zu senden.

8. Basistransceiverstation (111) zum Bestimmen der Anzahl und/oder Fähigkeiten von Benutzerausrüstungen (20) in einem geographischen Gebiet (10) eines Zugangsnetzes (110) eines öffentlichen terrestrischen Mobilfunknetzes (100), wobei das Zugangsnetz (110) die Basistransceiverstation (111) umfasst, wobei mehrere Benutzerausrüstungen (20) in dem geographischen Gebiet (10) Steuersignale (201, 202) von der Basistransceiverstation (111) empfangen, wobei die Steuersignale (201, 202) auf einem Broadcast Control Channel (BCCH) gesendet werden, wobei die Basistransceiverstation (111) dafür eingerichtet ist, ein Identitätsanfrage-Informationselement (210) an die mehreren Benutzerausrüstungen (20) auf dem Broadcast Control Channel (BCCH) der Basistransceiverstation (111) zu senden, wobei die Basistransceiverstation (111) des Weiteren dafür eingerichtet ist, ein Identitätsinformationselement (220) von mindestens einem Teil der Benutzerausrüstungen (20) der mehreren Benutzerausrüstungen (20) zu empfangen,
wobei sich die mehreren Benutzerausrüstungen (20) in einem passiven Zustand oder in einem passiven Betriebsmodus befinden,
wobei das Identitätsinformationselement (220) einen auf die Identität der Benutzerausrüstung (20) bezogenen Hinweis und mindestens eine der folgenden Informationen umfasst:
- einen Hinweis in Bezug auf den aktuellen Status der Benutzerausrüstung (20), wobei sich der Hinweis in Bezug auf den aktuellen Status der Benutzerausrüstung (20) darauf bezieht, ob sich die Benutzerausrüstung (20) im Leerlaufmodus befindet;
- einen Hinweis in Bezug auf die Fähigkeiten der Benutzerausrüstung (20), wobei sich der Hinweis in Bezug auf die Fähigkeiten der Benutzerausrüstung (20) auf eine Information bezüglich eines möglichen Satzes von Funkzugangstechnologien bezieht, welche die Benutzerausrüstung (20) verwenden kann;
- einen Hinweis in Bezug auf eine Aufzeichnung einer früheren Nutzung der Benutzerausrüstung (20).

9. Basistransceiverstation (111) nach Anspruch 8, wobei jeder Benutzerausrüstung (20) der mehreren Benutzerausrüstungen (20) ein Zugriffsklassenwert zugewiesen wird, wobei die Basistransceiverstation (111) so eingerichtet ist, dass das Identitätsanfrage-Informationselement (210) einen Zugriffsklassenhinweis umfasst.

10. Basistransceiverstation (111) nach eingerichtet 8 oder 9, wobei die Basistransceiverstation (111) so eingerichtet ist, dass das Identitätsanfrage-Informationselement (210) einen Zeithinweis umfasst.

11. Programm, das einen computerlesbaren Programmcode umfasst, der, wenn er auf einem Computer oder in einer Benutzerausrüstung (20) oder in einer Basistransceiverstation (111) ausgeführt wird, den Computer oder die Benutzerausrüstung (20) oder die Basistransceiverstation (111) veranlasst, ein Verfahren nach einem der Ansprüche 1 bis 4 auszuführen.

12. Computerprogrammprodukt zur Verwendung einer Benutzerausrüstung (20) mit einer Basistransceiverstation (111), wobei das Computerprogrammprodukt ein auf einem Speichermedium gespeichertes Computerprogramm umfasst, wobei das Computerprogramm Programmcode umfasst, der, wenn er auf einem Computer oder in der Benutzerausrüstung (20) oder in der Basistransceiverstation (111) ausgeführt wird, den Computer oder die Benutzerausrüstung (20) oder die Basistransceiverstation (111) veranlasst, ein Verfahren nach einem der Ansprüche 1 bis 4 auszuführen.

## Revendications

1. Procédé de détermination du nombre et/ou de capacités d'équipements utilisateur (20) dans une zone géographique (10) d'un réseau d'accès (110) d'un réseau mobile terrestre public (100), dans lequel le réseau d'accès (110) comprend au moins une station émetteur-récepteur de base (111), dans lequel une pluralité d'équipements utilisateur (20) dans la zone géographique (10) reçoivent des signaux de commande (201, 202) depuis la station émetteur-récepteur de base (111), dans lequel les signaux de commande (201, 202) sont envoyés sur un canal balisé *(Broadcast Control Channel,* BCCH) dans lequel le procédé comprend les étapes suivantes :
- dans une première étape, un élément d'informations de demande d'identité (210) est envoyé de la station émetteur-récepteur de base (111) à la pluralité d'équipements utilisateur (20) sur le canal balisé (*Broadcast Control Channel,* BCCH) de la station émetteur-récepteur de base (111),
- dans une seconde étape, un élément d'informations d'identité (220) est envoyé à la station émetteur-récepteur de base (111) par au moins une partie des équipements utilisateur (20) de la pluralité d'équipements utilisateur (20),
dans lequel la pluralité d'équipements utilisateur (20) sont dans un état passif ou dans un mode de fonctionnement passif, dans lequel l'élément d'informations d'identité (220) comprend une indication concernant l'identité de l'équipement utilisateur (20) et au moins l'un des fragments d'informations suivants :
- une indication concernant un statut actuel de l'équipement utilisateur (20), dans lequel l'indication concernant le statut actuel de l'équipement utilisateur (20) fait référence au fait que l'équipement utilisateur (20) est en mode veille ou non ;
- une indication concernant des capacités de l'équipement utilisateur (20), dans lequel l'indication concernant les capacités de l'équipement utilisateur (20) concerne une information relative à un ensemble possible de technologies d'accès radio que l'équipement utilisateur (20) est capable d'utiliser ;
- une indication concernant un enregistrement d'usage précédent de l'équipement utilisateur (20).

2. Procédé selon la revendication 1, dans lequel une valeur de classe d'accès est attribuée à chaque équipement utilisateur (20) de la pluralité d'équipements utilisateur (20), dans lequel une indication de classe d'accès est envoyée sur le canal balisé (*Broadcast Control Channel,* BCCH) de la station émetteur-récepteur de base (111), dans lequel un équipement utilisateur (20) de la pluralité d'équipements utilisateur (20) envoie l'élément d'informations d'identité (220) uniquement en cas de concordance entre la valeur de classe d'accès attribuée et l'indication de classe d'accès.

3. Procédé selon l'une quelconque des revendications précédentes, dans lequel l'élément d'informations de demande d'identité (210) comprend une indication de minutage, dans lequel l'élément d'informations d'identité (220) est envoyé par des équipements utilisateur (20) différents à des moments différents, et en fonction de l'indication de minutage, ultérieurement à la réception de l'élément d'informations de demande d'identité (210).

4. Procédé selon l'une quelconque des revendications précédentes, dans lequel la transmission de l'élément d'informations d'identité (220) dans la seconde étape à la station émetteur-récepteur de base (111) survient au moins une fois pendant un intervalle de temps de comptage prédéterminé.

5. Equipement utilisateur (20) pour une utilisation dans une zone géographique (10) d'un réseau d'accès (110) d'un réseau mobile terrestre public (100), dans lequel le réseau d'accès (110) comprend au moins une station émetteur-récepteur de base (111), dans lequel l'équipement utilisateur (20) reçoit des signaux de commande (201, 202) depuis la station émetteur-récepteur de base (111) sur un canal balisé (*Broadcast Control Channel,* BCCH) de la station émetteur-récepteur de base (111), dans lequel l'équipement utilisateur (20) est configuré de sorte qu'un élément d'informations d'identité (220) soit envoyé à la station émetteur-récepteur de base (111) en cas de réception d'un élément d'informations de demande d'identité (210) depuis la station émetteur-récepteur de base (111) sur le BCCH de la station émetteur-récepteur de base (111),
dans lequel l'équipement utilisateur (20) est dans un état passif ou un mode de fonctionnement passif,
dans lequel l'élément d'informations d'identité (220) comprend une indication concernant l'identité de l'équipement utilisateur (20) et au moins l'un des fragments d'informations suivants :
- une indication concernant un statut actuel de l'équipement utilisateur (20), dans lequel l'indication concernant le statut actuel de l'équipement utilisateur (20) fait référence au fait que l'équipement utilisateur (20) est en mode veille ou non ;
- une indication concernant des capacités de l'équipement utilisateur (20), dans lequel l'indication concernant les capacités de l'équipement utilisateur (20) concerne une information relative à un ensemble possible de technologies d'accès radio que l'équipement utilisateur (20) est capable d'utiliser ;
- une indication concernant un enregistrement d'usage précédent de l'équipement utilisateur (20).

6. Equipement utilisateur (20) selon la revendication 5, dans lequel une valeur de classe d'accès est attribuée à l'équipement utilisateur (20), dans lequel une indication de classe d'accès est envoyée sur le canal balisé (*Broadcast Control Channel,* BCCH) de la station émetteur-récepteur de base (111), dans lequel l'équipement utilisateur (20) est configuré pour envoyer l'élément d'informations d'identité (220) uniquement en cas de concordance entre la valeur de classe d'accès attribuée et l'indication de classe d'accès.

7. Equipement utilisateur (20) selon la revendication 5 ou 6, dans lequel l'élément d'informations de demande d'identité (210) comprend une indication de minutage, dans lequel l'équipement utilisateur (20) est configuré pour envoyer l'élément d'informations d'identité (220) ultérieurement à la réception de l'élément d'informations de demande d'identité (210) en fonction de l'indication de minutage.

8. Station émetteur-récepteur de base (111) pour déterminer le nombre et/ou des capacités d'équipements utilisateur (20) dans une zone géographique (10) d'un réseau d'accès (110) d'un réseau mobile terrestre public (100), dans laquelle le réseau d'accès (110) comprend la station émetteur-récepteur de base (111), dans laquelle une pluralité d'équipements utilisateur (20) dans la zone géographique (10) reçoivent des signaux de commande (201, 202) depuis la station émetteur-récepteur de base (111), dans laquelle les signaux de commande (201, 202) sont envoyés sur un canal balisé (*Broadcast Control Channel,* BCCH) dans laquelle la station émetteur-récepteur de base (111) est configurée pour envoyer un élément d'informations de demande d'identité (210) à la pluralité d'équipements utilisateur (20) sur le canal balisé (*Broadcast Control Channel,* BCCH) de la station émetteur-récepteur de base (111), dans laquelle la station émetteur-récepteur de base (111) est en outre configurée pour recevoir un élément d'informations d'identité (220) depuis au moins une partie des équipements utilisateur (20) de la pluralité d'équipements utilisateur (20),
dans laquelle la pluralité d'équipements utilisateur (20) sont dans un état passif ou dans un mode de fonctionnement passif,
dans laquelle l'élément d'informations d'identité (220) comprend une indication concernant l'identité de l'équipement utilisateur (20) et au moins l'un des fragments d'informations suivants :
- une indication concernant un statut actuel de l'équipement utilisateur (20), dans laquelle l'indication concernant le statut actuel de l'équipement utilisateur (20) fait référence au fait que l'équipement utilisateur (20) est en mode veille ou non ;
- une indication concernant des capacités de l'équipement utilisateur (20), dans laquelle l'indication concernant les capacités de l'équipement utilisateur (20) concerne une information relative à un ensemble possible de technologies d'accès radio que l'équipement utilisateur (20) est capable d'utiliser ;
- une indication concernant un enregistrement d'usage précédent de l'équipement utilisateur (20).

9. Station émetteur-récepteur de base (111) selon la revendication 8, dans laquelle une valeur de classe d'accès est attribuée à chaque équipement utilisateur (20) de la pluralité d'équipements utilisateur (20),
dans laquelle la station émetteur-récepteur de base (111) est configurée de sorte que l'élément d'informations de demande d'identité (210) comprenne une indication de classe d'accès.

10. Station émetteur-récepteur de base (111) selon la revendication 8 ou 9, dans laquelle la station émetteur-récepteur de base (111) est configurée de sorte que l'élément d'informations de demande d'identité (210) comprenne une indication de minutage.

11. Programme comprenant un code de programme lisible par ordinateur qui, lorsqu'il est exécuté sur un ordinateur ou sur un équipement utilisateur (20) ou sur une station émetteur-récepteur de base (111), amène l'ordinateur ou l'équipement utilisateur (20) ou la station émetteur-récepteur de base (111) à réaliser un procédé selon l'une des revendications 1 à 4.

12. Produit de programme d'ordinateur pour l'utilisation d'un équipement utilisateur (20) avec une station émetteur-récepteur de base (111), le produit de programme d'ordinateur comprenant un programme d'ordinateur stocké sur un support de stockage, le programme d'ordinateur comprenant un code de programme qui, lorsqu'il est exécuté sur un ordinateur ou sur un équipement utilisateur (20) ou sur une station émetteur-récepteur de base (111), amène l'ordinateur ou l'équipement utilisateur (20) ou la station émetteur-récepteur de base (111) à réaliser un procédé selon l'une des revendications 1 à 4.
